## Europäisches Patentamt

## European Patent Office

## Office européen des brevets

(19)

(11) Veröffentlichungsnummer: **0 090 959**
**B1**

(12) **EUROPÄISCHE PATENTSCHRIFT**

(45) Veröffentlichungstag der Patentschrift:
**10.12.86**

(51) Int. Cl.⁴: **B 29 C 67/20**

(21) Anmeldenummer: **83102352.8**

(22) Anmeldetag: **10.03.83**

(54) **Verfahren zur Herstellung einer Schaumstoffschichtplatte.**

(30) Priorität: **02.04.82 DE 3212300**

(43) Veröffentlichungstag der Anmeldung:
**12.10.83 Patentblatt 83/41**

(45) Bekanntmachung des Hinweises auf die Patenterteilung:
**10.12.86 Patentblatt 86/50**

(84) Benannte Vertragsstaaten:
**AT BE CH FR GB IT LI LU NL SE**

(56) Entgegenhaltungen:
**BE - A - 785 640**
**CH - A - 454 440**
**DE - A - 1 669 786**
**DE - A - 2 915 474**
**GB - A - 1 128 673**
**GB - A - 2 038 668**
**GB - A - 2 096 923**
**US - A - 3 112 524**

(73) Patentinhaber: **Schaeffler Teppichboden GmbH,
Jäckstrasse 3, D-8600 Bamberg (DE)**

(72) Erfinder: **Schwerdtfeger, Peter, Gleusdorf 64,
D-8601 Untermerzbach (DE)**

(74) Vertreter: **Gaiser, Hartmut, Dipl.-ing., Sulzbacher
Strasse 39, D-8500 Nürnberg 20 (DE)**

ACTORUM AG

## Beschreibung

Die Erfindung betrifft ein Verfahren zur Herstellung einer Schaumstoffschichtplatte mit Deckschichten, wobei in einem ersten Verfahrensschritt auf eine Polyurethanschaumstoffbahn aufschäumbare Polyurethanmasse als Schicht aufgetragen wird, in einem anschliessenden zweiten Verfahrensschritt ein Aktivator bestehend aus einem Katalysator und Feuchtigkeit zugeführt wird und in einem letzten Verfahrensschritt die Deckschichten aufgebracht werden und unter Wärmezufuhr das Aufschäumen der Polyurethanmasse erfolgt.

Ein derartiges Verfahren ist in der DE-PS 1 669 786 beschrieben. Bei diesem Verfahren wird die Polyurethanmasse lediglich auf die Oberfläche der Schaumstoffbahn als Film aufgetragen. Ein wesentliches Eindringen der Polyurethanmasse in die Tiefe der Polyurethanschaumstoffbahn erfolgt dabei nicht. Dies ist dann ungünstig, wenn dicke Schaumstoffbahnen mit Deckschichten versehen werden sollen.

Ein ähnliches Verfahren ist in der DE-PS 1 032 714 beschrieben. Bei diesem Verfahren wird Polyurethanmasse in dünner Schicht auf die Schaumstoffbahn aufgetragen. Anschliessend werden beidseitig textile Deckschichten aufgelegt und zur Formhaltung leicht aufeinandergepresst.

Bei den bekannten Verfahren ist schwer ein in der Menge festgelegter Auftrag der Polyurethanmasse und des Aktivators zu erreichen, so dass die Aufschäumbedingungen kaum festlegbar sind. Wird zuviel Polyurethanmasse aufgetragen, kann dies zu einer Verhärtung oder zu einem Dickenübermass der fertigen Schichtplatte führen. Wird zu wenig Polyurethanmasse aufgetragen, dann wird die Verbindung zwischen dem Schaumstoff und der Deckschicht unzureichend oder die fertige Schichtplatte hat Untermass. Auch ein ungleichmässiger Auftrag der Polyurethanmasse ist ungünstig. Ähnliches gilt für einen nicht definierten Auftrag des Aktivators, wobei hinzu kommt, dass ein mehr oder weniger willkürlicher Aktivatorauftrag auch den zeitlichen Ablauf des Aufschäumvorganges der Polyurethanmasse beeinflusst.

In der DE-OS 2 915 474 ist ein Verfahren beschrieben, bei dem eine Zweikomponenten-Polyurethanhartschaummasse mittels eines Mischkopfes vor einer eine Deckschicht auftragenden Rolle auf eine Polyurethanweichschaumplatte aufgespritzt wird. Die Eindringtiefe der Polyurethanmasse in die Weichschaumplatte lässt sich zwar durch den Anpressdruck der Rolle einstellen. Ein gleichmässiger und gleichbleibender Auftrag der Polyurethanmasse auf die Weichschaumplatte ist jedoch nicht gewährleistet. Denn durch das direkte Aufspritzen der Polyurethanmasse auf die Weichschaumplatte führen Schwankungen im Massenauftrag zu Schwankungen der in die Weichschaumplatte eindringenden Massenmenge.

Aufgabe der Erfindung ist es, ein Verfahren der eingangs genannten Art vorzuschlagen, bei dem der Auftrag der Polyurethanmasse und des Aktivators festlegbar ist und bei dem die Polyurethanmasse und der Aktivator in der Schaumstoffbahn gleichmässig verteilbar sind.

Erfindungsgemäss ist obige Aufgabe bei einem Verfahren der eingangs genannten Art dadurch gelöst, dass im ersten Verfahrensschritt die Schaumstoffbahn beim Auftrag der Polyurethanmasse zusammengedrückt und danach zur Entspannung freigegeben wird, und dass im zweiten Verfahrensschritt beim Auftrag des Aktivators, der zuvor mittels eines festen, saugfähigen Feuchtigkeitsträgers verdickt worden ist, die Schaumstoffbahn zusammengedrückt und danach zur Entspannung freigegeben wird.

Dadurch, dass die offenporige Schaumstoffbahn zunächst zusammengedrückt und nach dem Auftrag der Polyurethanmasse freigegeben wird, wird die Polyurethanmasse in die Schaumstoffbahn eingesaugt. Gleiches gilt für das anschliessende Auftragen des Aktivators, wobei bei diesem zweitmaligen Zusammendrücken und Entspannen nochmals die Polyurethanmasse in der Schaumstoffbahn verteilt wird. Es ist im Endergebnis eine gleichmässige Verteilung der Polyurethanmasse und des Aktivators in der Schaumstoffbahn erreicht, wobei auch sichergestellt ist, dass der Aktivator an alle Stellen gelangen kann, in die zuvor die Polyurethanmasse verteilt wurde. Dadurch, dass der Aktivator gegenüber der Dünnflüssigkeit von Wasser zähflüssiger eingestellt ist, – seine Viskosität beträgt beispielsweise 2000–3000 cP – ist sichergestellt, dass dieser ein ähnliches Fliessverhalten wie die Polyurethanmasse hat. Er lässt sich damit ebenso im Rollenauftrag auf der Schaumstoffbahn aufbringen wie die Polyurethanmasse. Die Viskosität ist so gewählt, dass sich in Drehrichtung der Rolle gesehen nach dem Spalt auf der Rolle ein gleichmässiger Film bzw. eine gleichmässige Schicht der Polyurethanmasse bzw. des Aktivators bildet, den bzw. die diese zur zusammengedrückten Schaumstoffbahn transportiert und auf diese überträgt.

Durch die Erfindung ist der Ablauf des Aufschäumvorgangs weitgehend unabhängig von der Deckschicht und insbesondere nicht von deren Saugfähigkeit abhängig. Darüber hinaus ist erreicht, dass die Deckschicht beim Herstellungsverfahren nicht beschmutzt wird, da sie nicht feucht ist oder wird, so dass auch empfindliches textiles Material als Deckschicht verwendet werden kann.

Besonders günstig wirkt sich das erfindungsgemässe Verfahren dann aus, wenn eine relativ dicke Schaumstoffbahn mit Einprägungen versehen werden soll, deren Tiefe geringer als die Dicke der Schaumstoffbahn ist.

In bevorzugter Ausgestaltung der Erfindung werden die Polyurethanmasse und der Aktivator auf je eine Rolle aufgegeben, die die Schaumstoffbahn fördert und dabei zusammendrückt. Zum beidseitigen Auftrag von Polyurethanmasse und Aktivator werden die Polyurethanmasse und der Aktivator von je einer Unterrolle und einer ihr gegenüberliegenden Oberrolle beidseitig auf die Schaumstoffbahn aufgetragen. Zur Verdickung des Aktivators wird vorzugsweise Zellulose eingesetzt.

In bevorzugter Weiterbildung der Erfindung ist jeder Rolle eine Dosierwalze zugeordnet, die mit dieser einen, vorzugsweise einstellbaren, Spalt bildet, der von oben mit Polyurethanmasse bzw. verdicktem Aktivator im Überschuss gespeist wird und dass der Spalt am Umfang der Rolle von der Stelle beabstandet ist, an der diese die Schaumstoffbahn zusammendrückt, so dass sich an der Rolle eine Schicht der Polyurethanmasse bzw. des verdickten Aktivators bildet, die die Rolle zur Schaumstoffbahn fördert. Damit ist eine über die Breite der Rolle exakte Dosierung der Menge der Polyurethanmasse bzw. des Aktivators möglich, die die Rolle selbst auf die von ihr zusammengedrückte Schaumstoffbahn überträgt.

Weitere vorteilhafte Ausgestaltungen der Erfindung ergeben sich aus den weiteren Unteransprüchen. Im folgenden wird die Erfindung anhand eines Ausführungsbeispiels näher erläutert. In der Zeichnung zeigen:

Figur 1 eine Anlage zur Durchführung des erfindungsgemässen Verfahrens,

Figur 2 eine gegenüber Figur 1 vergrösserte Teilansicht des Rollenaggregats der Anlage,

Figur 3 eine Form für die Anlage nach Figur 1

Von einem Stapel von Polyurethanschaumstoffplatten 1 werden die Platten einzeln einem ersten Rollenaggregat 2 zugeführt und gelangen anschliessend in ein zweites Rollenaggregat 3.

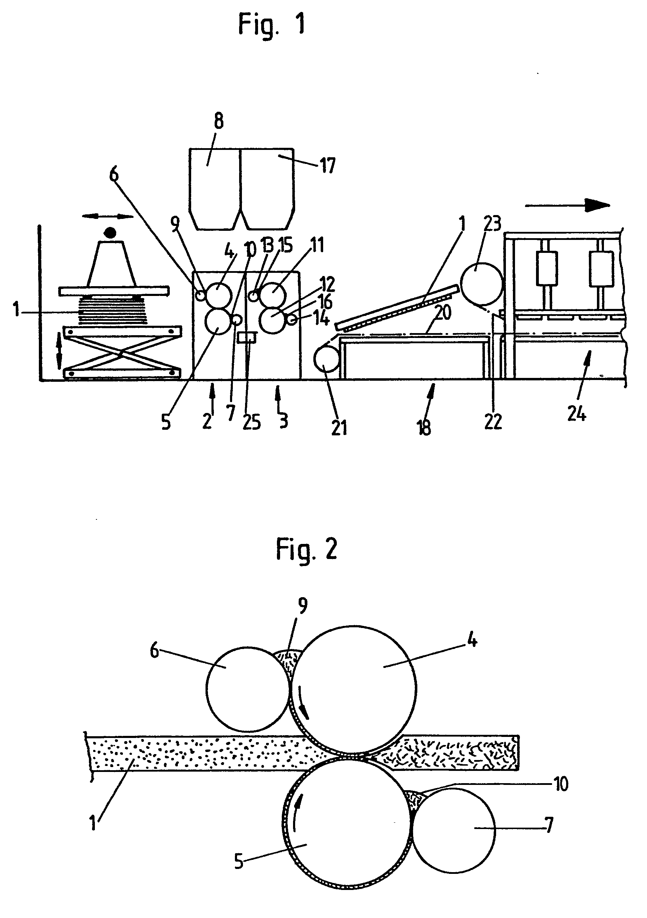

Das Rollenaggregat 2 weist eine Oberrolle 4 und eine Unterrolle 5 auf. Jeder der beiden Rollen 4 bzw. 5 ist je eine Dosierwalze 6 bzw. 7 zugeordnet. Aus einem Speicherbehälter 8 werden Spalte 9 bzw. 10 zwischen der Oberrolle 4 und der Dosierwalze 6 bzw. der Unterrolle 5 und der Dosierwalze 7 kontinuierlich mit einer Polyurethanmasse im Überschuss beschickt. Die Oberrolle 4 und die Unterrolle 5 sind motorisch angetrieben. Der Abstand der Oberrolle 4 von der Unterrolle 5 ist so eingestellt, dass eine zwischen ihnen hindurchgeförderte Polyurethanschaumstoffplatte 1 etwa auf 10% bis 20% ihrer Ausgangsdicke zusammengedrückt wird (vgl. Figur 2). Im Rollenaggregat 2 wird auf die Polyurethanschaumstoffplatte 1 im zusammengedrückten Zustand Polyurethanmasse von oben und unten aufgebracht.

Die Polyurethanmasse ist ein Polymer-Vorprodukt (Prepolymer), welches insbesondere aus einem anhydrischen Gemisch eines polyfunktionellen Kunstharzmaterials und Polyisocyanat besteht. Das polyfunktionelle Kunstharz ist beispielsweise Polyester oder Polyäther. Das Prepolymer ist unabhängig von der Umgebungstemperatur im Speicherbehälter 8 auf etwa 50°C erwärmt. Seine Viskosität beträgt 2000 bis 3000 cP. Es ist somit so flüssig, dass es auf den Rollen 4, 5 einen gleichmässigen Film bzw. Schicht bildet. Die Dicke des Films bzw. der Schicht wird durch die Breite des Spaltes 9, 10 bestimmt (vgl. Figur 2). Durch die flüssige Einstellung des Prepolymers kann es auch von feinen Poren der Polyurethanschaumstoffplatte 1 aufgenommen werden.

Das Prepolymer wird von der Oberrolle 4 oben und von der Unterrolle 5 unten auf die von den Rollen 4, 5 zusammengedrückte (vgl. Figur 2) Polyurethanschaumstoffplatte 1 aufgebracht. Nach dem Durchtritt der Schaumstoffplatte 1 zwischen den Rollen 4 und 5 weitet sich diese aufgrund ihrer Elastizität auf ihre ursprüngliche Dicke aus. Dabei tränkt sich der aufweitende Bereich mit Prepolymer, so dass nach den Rollen 4, 5 die Schaumstoffplatte 1 im Beispielsfalle von oben und von unten je zu etwa 40% ihrer Dicke durchtränkt ist.

Das Rollenaggregat 3 weist eine weitere Oberrolle 11 und eine weitere Unterrolle 12 auf. Jeder dieser beiden Rollen 11 und 12 ist eine Dosierwalze 13 bzw. 14 zugeordnet. Spalte 15 bzw. 16 zwischen der Oberrolle 11 und der Dosierwalze 13 bzw. der Unterrolle 12 und der Dosierwalze 14 sind aus einem Speicherbehälter 17 kontinuierlich mit einem Aktivator beschickt. Der Abstand der Rollen 11 und 12 ist so bemessen, dass die getränkte Polyurethanschaumstoffplatte 1 erneut zusammengedrückt wird. Das Mass des Zusammendrückens ist etwa gleich dem Zusammendrücken zwischen den Rollen 4 und 5. Der Abstand der Rollen 11 und 12 wird so eingestellt, dass nach den Rollen der Aktivator möglichst durchgehend in die Zonen gelangt, in denen zuvor Prepolymer abgelagert wurde. Die Film- bzw. Schichtbildung des Aktivators an den Rollen 11 und 12 ist so wie bei den Rollen 4 und 5 beschrieben.

Der Aktivator enthält Wasser und einen Katalysator. Als Katalysator wird beispielsweise N, N, N′, N′-Tetramethyl-1,3-Butandiamin oder Zinnkatalysator eingesetzt. Da diese Mischung an sich sehr dünnflüssig ist und sich nicht gleichmässig und in der gewünschten Menge mittels der Rollen 11 und 12 auf die Schaumstoffplatte 1 auftragen liesse, ist der Aktivator durch Zugabe von Zellulose auf 2000 bis 3000 cP zähflüssig eingestellt. Die Zellulosepartikel sind dabei kleiner als die Poren der verwendeten Schaumstoffplatte, damit diese sich nicht auf der Platte ablagern.

Der Aktivator ist im Speicherbehälter 17 etwa auf die gleiche Temperatur erwärmt wie das Prepolymer. Damit sind an der Schaumstoffplatte 1 Temperatursprünge vermieden.

Nach dem Verlassen der Rollen 11 und 12 weitet sich die Schaumstoffplatte erneut auf ihre ursprüngliche Dicke auf. Dabei vermengt sich in den Poren der Schaumstoffplatte 1 der Aktivator mit dem Prepolymer.

Der Abstand der beiden Rollenaggregate 2 und 3 ist kürzer bemessen als die Durchlauflänge einer Schaumstoffplatte so dass die Platte in einem Zug durch beide Rollenaggregate 2 und 3 geführt wird. Zwischen den Rollenaggregaten 2 und 3 ist die Polyurethanschaumstoffplatte von einem Luftpolster 25 getragen. Dieses sichert den Transport der Platte, ohne dass Transportaggregate verschmutzen.

Nach dem Verlassen der Rollenaggregate 2 und 3 ist die Schaumstoffplatte von beiden Seiten her mit Prepolymer getränkt und mit Aktivator benetzt, wobei die Tränkungsmenge sowohl hinsichtlich des Prepolymers als auch des Aktivators von dem Mass des Zusammendrückens der Schaumstoffplatte in den Rollenaggregaten 2 bzw. 3 und der Breite der Spalte 9, 10, 15 und 16 bestimmt ist. Die Spalte 9, 10, 15 und 16 werden so eingestellt, dass zunächst auf die Rollen und dann auf die Schaumstoffplatte jeweils die notwendige Menge von Prepolymer bzw. Aktivator im Durchlauf der Schaumstoffplatte übertragen werden. Vor dem Spalt ist Prepolymer bzw. Aktivator im Überschuss vorhanden, so dass die Spalte nicht leerlaufen. Durch eine Verdickung des Aktivators auf eine Fliessfähigkeit, die ähnlich der des vorgewärmten Prepolymers ist, lässt sich diese erleichtern. Die Schaumstoffplatte ist also nach dem Verlassen des Rollenaggregats 3 hinsichtlich der Eindringtiefe und der Verteilung des Prepolymers und des Aktivators gleichmässig benetzt, ohne dass diese Aufträge lediglich von der Oberfläche der Schaumstoffplatte mehr oder weniger unkontrolliert in diese einsickern. Die Schaumstoffplatte wirkt damit in ihrer Porenverteilung als Trägergerüst für den nachfolgenden Aufschäumvorgang, da sie durch das zweimalige Zusammendrücken des Prepolymer und den dessen Reaktion bestimmenden Aktivator in sich aufgenommen hat.

Durch die in der Eindringtiefe und in der Auftragsmenge definierte Verteilung von Prepolymer und Aktivator ist es möglich, einen automatischen Verfahrensablauf zu gestalten, ohne dass das Verfahrensergebnis von zahlreichen Unwägbarkeiten abhängt.

Nach dem Verlassen des Rollenaggregats 3 hat die getränkte und aktivierte Schaumstoffplatte einen bestimmten und von Schaumstoffplatte zu Schaumstoffplatte gleichen Zustand. Sie wird in diesem Zustand einer Station 18 zugeführt.

In der Station 18 wird die getränkte und aktivierte Schaumstoffplatte 1 zwischen eine textile Unterdeckschicht 20, die von einer Walze 21 abläuft und eine textile Oberdeckschicht 22, die von einer Walze 23 abläuft, gefördert. Anschliessend wird die Schaumstoffplatte 1 in einer auf maximal 120 °C vorgeheizten Formpresse 24 bearbeitet. In der Formpresse 24 werden die Deckschichten 20 und 22 mit den gewünschten Einprägungen in die Schaumstoffplatte 1 gedrückt, wobei das Prepolymer formhaltig aufschäumt.

Die Formpresse 24 übernimmt gleichzeitig das Ausstanzen der gewünschten Umfangskontur der Schaumstoffschichtplatte. Die Breite der auf der Walze 21 zur Verfügung gestellten Unterdeckschicht ist grösser als die Breite der Schaumstoffplatte 1. Die Unterdeckschicht 20 übernimmt den Einzug der Schaumstoffplatte 1 in die Formpresse 24 und den Auszug der ausgestanzten Schaumstoffschichtplatte aus der Formpresse 24.

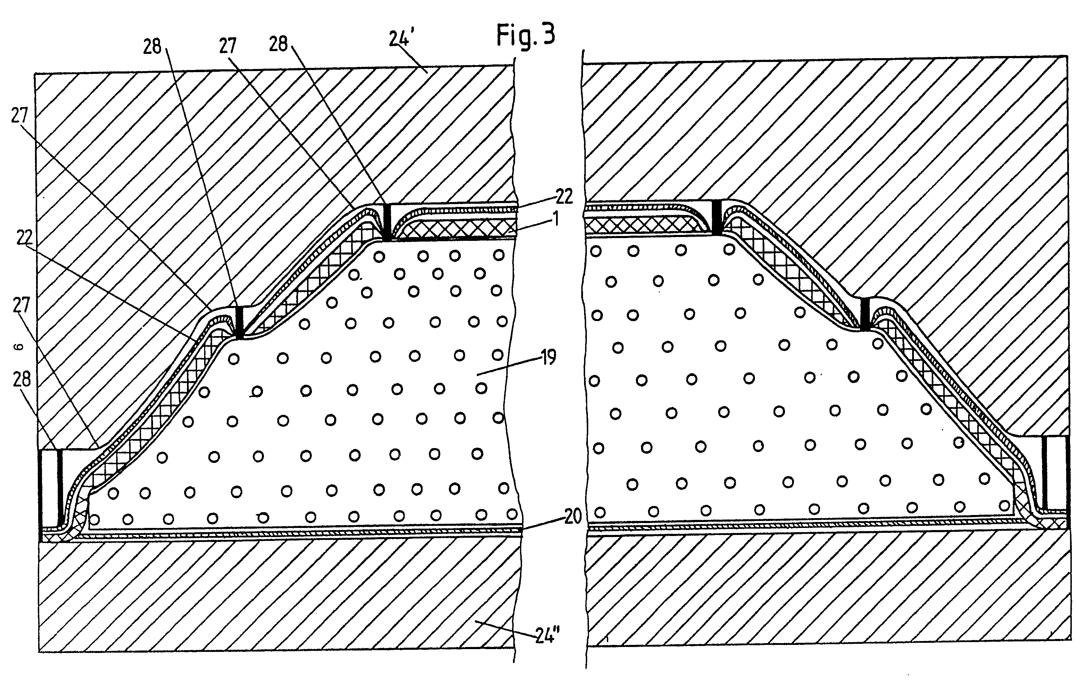

In Figur 3 ist schematisch eine Querschnittsform einer Schaumstoffschichtplatte dargestellt, wie sie sich als Auflage für einen Kraftfahrzeugsitz nach dem erfindungsgemässen Verfahren herstellen lässt. Gezeigt ist die Form in der Presse 24 in deren formbestimmten Oberformteil 24' und deren glatten Unterformteil 24''.

Die Form 24' (vgl. Figur 3) erhebt sich in mehreren Stufen 27 und weist Prägestege 28 auf. Die Schaumstoffplatte 1 wird damit über ihre Oberdeckschicht 22 stark verformt. Die Tränkung der Schaumstoffplatte 1 mit Prepolymer und Aktivator ist in diesem Falle so vorgenommen, dass nur ein innenliegender Polyurethanform-Schäumling 19 von der Tränkung freibleibt. Damit ist sichergestellt, dass einerseits eine sichere Bindung der Oberdeckschicht 22 im Bereich der Prägestege 28 mit der Schaumstoffplatte erfolgt und dass andererseits die Eigenschaften des Polyurethanform-Schäumlings als Ausgangsprodukt im Kernbereich erhalten bleiben.

**Patentansprüche**

1. Verfahren zur Herstellung einer Schaumstoffschichtplatte (19) mit Deckschichten (20, 22), wobei in einem ersten Verfahrensschritt auf eine Polyurethanschaumstoffbahn (1) aufschäumbare Polyurethanmasse als Schicht aufgetragen wird, in einem anschliessenden zweiten Verfahrensschritt ein Aktivator bestehend aus einem Katalysator und Feuchtigkeit zugeführt wird und in einem letzten Verfahrensschritt die Deckschichten (20, 22) aufgebracht werden und unter Wärmezufuhr das Aufschäumen der Polyurethanmasse erfolgt, dadurch gekennzeichnet, dass im ersten Verfahrensschritt die Schaumstoffbahn (1) beim Auftrag der Polyurethanmasse zusammengedrückt und danach zur Entspannung freigegeben wird, und dass im zweiten Verfahrensschritt beim Auftrag des Aktivators, der zuvor mittels eines festen, saugfähigen Feuchtigkeitsträgers verdickt worden ist, die Schaumstoffbahn (1) zusammengedrückt und danach zur Entspannung freigegeben wird.

2. Verfahren nach Anspruch 1, dadurch gekennzeichnet, dass die Polyurethanmasse und der Aktivator von je einer Rolle (4, 11; 5, 12) aufgetragen werden, die die Schaumstoffbahn (1) fördert und dabei zusammendrückt.

3. Verfahren nach Anspruch 2, dadurch gekennzeichnet, dass die Polyurethanmasse und der Aktivator von je einer Unterrolle (5, 12) und einer ihr gegenüberliegenden Oberrolle (4, 11) beidseitig auf die Schaumstoffbahn (1) aufgetragen werden.

4. Verfahren nach einem der vorhergehenden Ansprüche 2, 3, dadurch gekennzeichnet, dass jeder Rolle (4, 5, 11, 12) eine Dosierwalze (6, 7, 13, 14) zugeordnet ist, die mit dieser einen, vorzugsweise einstellbaren, Spalt (9, 10; 15, 16) bildet, der von oben mit Polyurethanmasse bzw. verdicktem Aktivator im Überschuss gespeist wird und dass der Spalt (9, 10, 15, 16) am Umfang der Rolle (4, 5; 11, 12) von der Stelle beabstandet ist, an der diese die Schaumstoffbahn (1) zusammendrückt, so dass sich an der Rolle (4, 5; 11, 12) eine Schicht der Polyurethanmasse bzw. des verdickten Aktivators bildet, die die Rolle 4, 5; 11, 12 zur Schaumstoffbahn (1) fördert.

5. Verfahren nach einem der vorhergehenden Ansprüche, dadurch gekennzeichnet, dass die Polyurethanmasse und der Aktivator vor dem Auftrag auf die Schaumstoffbahn (1) auf etwa 40 bis 60 °C vorgeheizt werden.

6. Verfahren nach einem der vorhergehenden Ansprüche, dadurch gekennzeichnet, dass die Polyurethanschaumstoffbahn (1) beim Auftrag der Polyurethanmasse auf etwa 50 bis 90%, insbesondere 80%, in ihrer Dicke zusammengedrückt wird und dass die mit Polyurethanmasse getränkte Polyurethanschaumstoffbahn (1) beim Auftrag des Aktivators auf etwa 50 bis 90% ihrer Dicke zusammengedrückt wird.

7. Verfahren nach einem der vorhergehenden Ansprüche, dadurch gekennzeichnet, dass der Aktivator mittels Zellulose auf etwa die Fliessfähigkeit der Polyurethanmasse verdickt wird.

**Claims**

1. Method for the production of a plastic foam laminate (19), having facing layers (20, 22), wherein, in a first process step, foamable polyurethane mass is applied as a coating onto a polyurethane foam sheet (1), in a following, second process step an activator, consisting of a catalyst and moisture, is added and, in a last process step, the facing layers (20, 22) are applied and foaming of the polyurethane mass with input of heat takes place, characterized in that, in the first process step, the foam sheet (1) is compressed when the polyurethane mass is applied and thereafter is released to expand, and that, in the second process step in the application of the activator, which previously has been thickened by means of a solid, absorbent moisture carrier, the foam sheet (1) is compressed and thereafter released to expand.

2. Method according to Claim 1, characterized in that the polyurethane mass and the activator are each applied by a roll (4, 11; 5, 12), which conveys the foam sheet (1) and thereby compresses it.

3. Method according to Claim 2, characterized in that the polyurethane mass and the activator are each applied onto both sides of the foam sheet (1), by a lower roll (5, 12) and an upper roll (4, 11) opposite to it.

4. Method according to one of the preceding claims 2 and 3, characterized in that a metering roller (6, 7, 13, 14) is associated with each roll (4, 5, 11, 12), which metering roller forms with the roll a preferably adjustable gap (9, 10; 15, 16), which is supplied from above with polyurethane mass or thickened activator in excess respectively, and that the gap (9, 10; 15, 16) is spaced on the circumference of the roll (4, 5; 11, 12) at a distance from the position at which this roll compresses the foam sheet (1), so that a coating of the polyurethane mass or of the thickened activator respectively forms on the roll (4, 5; 11, 12), which coating the roll (4, 5; 11, 12) conveys towards the foam sheet (1).

5. Method according to one of the preceding claims, characterized in that the polyurethane mass and the activator are preheated to approximately 40–60 °C before being applied onto the foam sheet (1).

6. Method according to one of the preceding claims, characterised in that the polyurethane foam sheet (1) is compressed in its thickness to approximately 50–90%, especially 80% as the polyurethane mass is applied, and that the polyurethane foam sheet (1), soaked in the polyurethane mass, is compressed to approxiamtely 50–90% of its thickness when the activator is applied.

7. Method according to one of the preceding claims, characterized in that the activator is thickened by means of cellulose to approximately the flowability of the polyurethane mass.

**Revendications**

1. Procédé de fabrication d'un panneau de mousse stratifié (19) comportant des couches de recouvrement (20, 22), dans lequel, au cours d'un premier stade opératoire, on applique à une bande (1) de mousse de polyuréthane une masse de polyuréthane moussable sous forme de couche, on ajoute, au cours d'un second stade opératoire subséquent, un activateur comprenant un catalyseur et de l'humidité et, au cours d'un dernier stade opératoire, on applique les couches de recouvrement (20, 22) et dans lequel le moussage de la masse de polyuréthane a lieu avec apport de chaleur, caractérisé en ce qu'au cours du premier stade opératoire, on comprime la bande de mousse (1) lors de l'application de la masse de polyuréthane, et on la relâche ensuite aux fins de détente, et en ce qu'au cours du second stade opératoire, lors de l'application de l'activateur qui a été épaissi préalablement au moyen d'un support d'humidité absorbant, on comprime la bande de mousse (1), et on la relâche ensuite aux fins de détente.

2. Procédé selon la revendication 1, caractérisé en ce qu'on applique la masse de polyuréthane et l'activateur chacun au moyen d'un rouleau respectif (4, 11; 5, 12), qui transporte la bande de mousse (1) et la comprime en même temps.

3. Procédé selon la revendication 2, caractérisé en ce qu'on applique la masse de polyuréthane et l'activateur chacun au moyen d'un rouleau inférieur respectif (5, 12) et d'un rouleau supérieur respectif (4, 11), opposé au rouleau inférieur, à la bande de mousse (1), des deux côtés.

4. Procédé selon l'une des revendications 2, 3 précédentes, caractérisé en ce qu'il correspond à chaque rouleau (4, 5, 11, 12) un cylindre de dosage (6, 7, 13, 14) qui forme avec lui une fente (9, 10; 15, 16), de préférence réglable, recevant par le haut de la masse de polyuréthane ou de l'activateur épaissi en excès, et en ce que la fente (9, 10; 15, 16) est, à la périphérie du rouleau (4, 5; 11, 12), éloignée du point auquel il comprime la bande de mousse (1), de sorte qu'il se forme sur le rouleau (4, 5; 11, 12) une couche de la masse de polyuréthane, respectivement de l'activateur épaissi, que le rouleau (4, 5; 11, 12) amène à la bande de mousse (1).

5. Procédé selon l'une des revendications précédentes, caractérisé en ce qu'on chauffe préalablement la masse de polyuréthane et l'activateur, avant l'application à la bande de mousse (1), à une température d'environ 40 à 60°C.

6. Procédé selon l'une des revendications précédentes, caractérisé en ce qu'on comprime la bande de mousse de polyuréthane (1), lors de l'application de la masse de polyuréthane, à environ 50 à 90%, en particulier 80% de son épaisseur, et en ce qu'on comprime la bande de mousse de polyuréthane (1) imprégnée de masse de polyuréthane, lors de l'application de l'activateur, à environ 50 à 90% de son épaisseur.

7. Procédé selon l'une des revendications précédentes, caractérisé en ce qu'on épaissit l'activateur au moyen de cellulose, de façon à obtenir à peu près la fluidité de la masse de polyuréthane.

# Fig. 1

# Fig. 2

Fig.3